# EUROPEAN PATENT APPLICATION

(11) **EP 0 659 934 A2**
(43) Date of publication of application: **28.06.1995**
(21) Application number: 94119663.6
(22) Date of filing: 13.12.1994
(51) Int. Cl.: D21F 3/02

(54) **Press belt or sleeve, incorporating an open base carrier for use in long nip presses, and method of making same**

(30) Priority: 14.12.1993 US 167499; 18.07.1994 US 276526
(71) Applicant: APPLETON MILLS, Appleton, Wisconsin 54913 (US)
(72) Inventor: Johnson, Michael C., Wisconsin 54915 (US); Le Gault, Dennis J., Wisconsin 54911 (US)
(74) Representative: Weitzel, Wolfgang, Dr.-Ing. Patentanwalt

(57) **Abstract**

A belt for a shoe press is constructed of an open-structure base or carrier which is coated with a solidified urethane coating material. The urethane coating is at least coextensive with the upper and lower surfaces of the base, and the base is preferably embedded within the coating. The belt is made by placing the open-structure base over a backing layer such as a coating belt or a layer of adhesive tape removably secured to the base, which in turn is trained about a pair of rollers so that the base overlies the backing layer. The urethane material, in liquid form, is poured onto the base, and flows through the openings and into the internal voids, and is supported by the backing layer. After the base is completely coated with the urethane material to form an endless belt, the belt is ground and removed from the backing layer.

## Description

### CROSS-REFERENCE TO RELATED APPLICATION

This application is a continuation-in-part of application S.N. 08/167,499, filed December 14, 1993.

### BACKGROUND AND SUMMARY OF THE INVENTION

This invention relates to an endless belt for use in a shoe press. More particularly, the invention relates to a press jacket used on a sleeve type of shoe press such as the Voith Flexonip press, or to belting used on a Beloit-type long nip press. Hereafter, such a press jacket or belting will be referred to as a belt.

A shoe press is used in a papermaking machine to dewater a fibrous web. The belt is typically used in combination with a felt, which functions to support the web between the belt and a cylindrical press roller. The belt is engaged by an arcuate pressure shoe, which includes a concave surface. The roller and the shoe cooperate to define a long nip through which the belt, felt and web pass to increase the dewatering of the web when compared to conventional nips on a papermaking machine.

Prior art shoe press belts are shown in a number of patents.

Adams U.S. Patent 4,552,620 teaches a paper-machine belt utilizing a two-part urethane system that is sprayed on an endless blanket of woven fabric. This process is seriously flawed, in that the spraying process creates voids in the urethane material. The presence of voids results in minimal abrasion resistance for the belt, which is a key characteristic for belts used in shoe presses.

Other patents include Best U.S. Patent 4,564,551 and Merckens U.S. Patent 5,175,037. Both of these patents teach incorporating a void volume in the belt itself by partially encapsulating a base structure with a polymeric resin. While this provides the paper-maker with an interesting concept to increase the dewatering capacity of the shoe press system, the structures disclosed in both patents have fundamental flaws. Specifically, the belts disclosed in these patents provide unsatisfactory operational performance and inadequate belt longevity. As to the former, the unsatisfactory operational performance is characterized by poor pressure profiles. The partially exposed base structure has supported intersections and unsupported legs. The unsupported legs tend to deform when compared to the supported intersections, during operation of the belt. This deformation causes a non-uniform pressure profile as the belt travels through the shoe press. The unsupported legs will also experience increased levels of flex fatigue due to repeated deformation when passing through the shoe press. This flex fatigue will also result in premature abrasion, resulting in localized structural failure, which will also contribute to non-uniform pressure profiles. As to the latter, the unencapsulated base structure will abrade at an accelerated rate when compared to a fully encapsulated belt. In addition, the partial encapsulation of the base structure results in a lower bond between the base structure and the resin layer of the belt, which will result in delamination of the belt over time.

Dutt et al U.S. Patent 5,234,551 discloses a press belt having the same inherent flaws as discussed above with respect to the Best and Merckens et al patents.

Generally, it is fair to say that prior art shoe press belts as described by Kuichi U.S. Patent 4,559,258 and Dutt U.S. Patent 4,946,731, utilize base fabrics or structures which are relatively closed or tightly woven. These base structures are complex and expensive to produce. Such structures are used to prevent the flow of the polyurethane resin material onto the inside surface of the structure, when the liquid urethane is applied during construction of the belt. If the belting manufacturer allows liquid polyurethane material to flow to the inside surface, the polyurethane material builds up on the coating rolls, while it is changing from a liquid state to a solid state very rapidly, resulting in "gumming up" of the coating rolls. Further, as the base structure travels away from the coating roll, the polyurethane material may drip through the base structure to its inside surface. This causes extreme inconsistencies in coating of the base structure. These coating problems may result in the inside surface of the belt "gumming up", and tracks the base structure on the coating roll, making uniform coating of the base structure impossible.

As polyurethane is poured, the material turns from a liquid state to a solid state in a very short time. It is thus advantageous for the belt manufacturer to impregnate the base structure with the liquid polyurethane material to the fullest extent possible as quickly as possible, to provide the greatest possible degree of integrity to the finished product. Further, it is important that the surface at which the polyurethane is forming must not experience shear forces during solidification of the polyurethane material. Any shear forces at the surface of the polyurethane before it has sufficient green strength to withstand such forces causes the resultant end product to have significant defects. Such defects will provide distortions across the material, thus lowering its ability to resist compression and abrasive forces. Further, such shear forces will result in entrapped air to create micro-cracking on the surface of the material.

It is an object of the present invention to address the above-noted problems with prior art shoe press belts and their manufacture. It is another object of the invention to advance the state-of-the-art in shoe press belt construction and manufacture to provide a belt which has extremely satisfactory operational characteristics, yet which is relatively simple to construct. It is a further object of the invention to provide a shoe press belt having a construction which is not dependent on the weave of the base structure.

In accordance with one aspect of the invention, an endless, impervious belt for use in a shoe press is made up of an open-structure base which defines first and second surfaces and a series of straight-through unimpeded passages extending therebetween, and including internal voids. A polymeric resin coating is applied to the base such that the base is embedded therein, to fill the passages and the internal voids. The coating extends at least coextensively with both the first and second surfaces of the base. Preferably, the coating extends well past one of the surfaces of the base, to enable the coating to be ground after it has solidified. The openness of the base structure allows the polymeric resin coating to flow through the base structure during manufacture of the belt.

In accordance with another aspect of the invention, an endless, impervious belt for a shoe press is made by first training an impervious coating belt about a pair of rollers such that the coating belt defines upper and lower runs, with the upper runs being substantially linear and preferably horizontal. A base fabric is placed about the pair of rollers and over the coating belt, such that the base fabric overlies the coating belt and is in close proximity thereto. The base fabric defines upper and lower surfaces and passages or voids which open onto both surfaces. At least one of the rollers is driven to simultaneously move the coating belt and the base fabric, resulting in movement of the upper run of the coating belt and the overlying base fabric. A flowable polymeric resin material is poured onto the base fabric so as to pass through the voids and onto the coating belt, to encase the base fabric. The polymeric resin material is then solidified, to form a unitary belt structure in which the base fabric is embedded within the solidified polymeric resin material. The polymeric resin material is preferably poured onto the base fabric toward the upstream end of the coating belt upper run, to provide sufficient time for the polymeric resin material to solidify before it reaches the downstream one of the pair of rollers. The polymeric resin material is poured onto the base fabric in a sufficient quantity that the upper surface of the polymeric resin material is spaced above the base fabric upper surface, to enable the upper surface of the polymeric resin material to be ground after it has solidified. The lower surface of the base fabric is maintained in close proximity to the coating belt, so that the polymeric resin material defines only a thin layer between the base fabric lower surface and the coating belt. The coating belt is an endless, heat stabilized, liquid impermeable belt, onto which the liquid urethane material is poured through the base fabric. This feature of the invention enables use of any weave pattern for the base fabric, especially open constructions or any other type of non-woven web having straight-through passages or voids. This enables the belt manufacturer to use more simple weave structures than in the prior art, which are not as complex as prior art base structures and which require less sophisticated equipment to manufacture. In addition, these straight-through passages provide for a completely continuous layer of urethane.

Alternatively, the coating belt may be replaced with a removable backing which is applied directly to the lower surface of the base. As before, the base is formed into an endless loop, and the backing covers the entire extent of the lower surface of the base. The base, with the backing applied, is then placed about the pair of coating rollers, with the backing engaging the coating rollers and providing sufficient friction to drive the base and backing upon rotation of either of the rollers. The flowable polymeric resin material is poured onto the base, flowing through the voids and passages of the base and into engagement with the backing. The backing prevents the resin material from dripping through the base, such that the base solidifies as described above to encapsulate the base. After the polymeric resin material is applied throughout the length and width of the base to form a belt, the belt is removed from the coating rolls and the backing is removed therefrom. The backing may be any satisfactory material which can be selectively engaged with and removed from a surface, e.g. an adhesive tape. The tape is formed of a heat stabilized material, and can easily be removed from the lower surface of the belt after the belt has been constructed.

The invention also allows the belt manufacturer to use a polymeric resin material having a relatively low viscosity, since the manufacturer does not have to be concerned with material dripping through the base fabric. In fact, the manufacturer chooses a polymeric resin material having a lower viscosity for just this reason, i.e. an increase in the ability of the material to flow increases the encapsulation ability of the material, to minimize occurrence of pouring flaws such as internal voids.

Various other features, objections and advantages of the invention will be made apparent from the following description taken together with the drawings.

### BRIEF DESCRIPTION OF THE DRAWINGS

The drawings illustrate the best mode presently contemplated of carrying out the invention.

In the drawings:
Fig. 1 is a plan view of a section of a spiraltype material which can be used to form the base or carrier for the shoe press belt of the invention;
Fig. 2 is a schematic side elevation view showing one manner of constructing a long nip press belt of the invention;
Fig. 3 is a partial longitudinal section view through a portion of shoe press belt of the invention constructed as in Fig. 2;
Fig. 4 is a view similar to Fig. 2, showing an alternative system for constructing a shoe press belt according to the invention;
Fig. 5 is a partial longitudinal section view through a portion of the shoe press belt of the invention constructed as in Fig. 4;
Fig. 6 is a plan view of a section of an alternative open-structure material which forms the base or carrier for the shoe press belt of the invention;
Fig. 7 is a schematic side elevation view showing an alternative manner of constructing a shoe press belt according to the invention;
Fig. 8 is an enlarged partial section view showing application of the polymeric resin material to the open-structure base or carrier;
Fig. 9 is a view similar to Fig. 8, showing an alternative method for constructing a shoe press belt according to the invention; and
Fig. 10 is a schematic side elevation view of a shoe press in which the belt of the invention is employed.

### DETAILED DESCRIPTION OF THE INVENTION

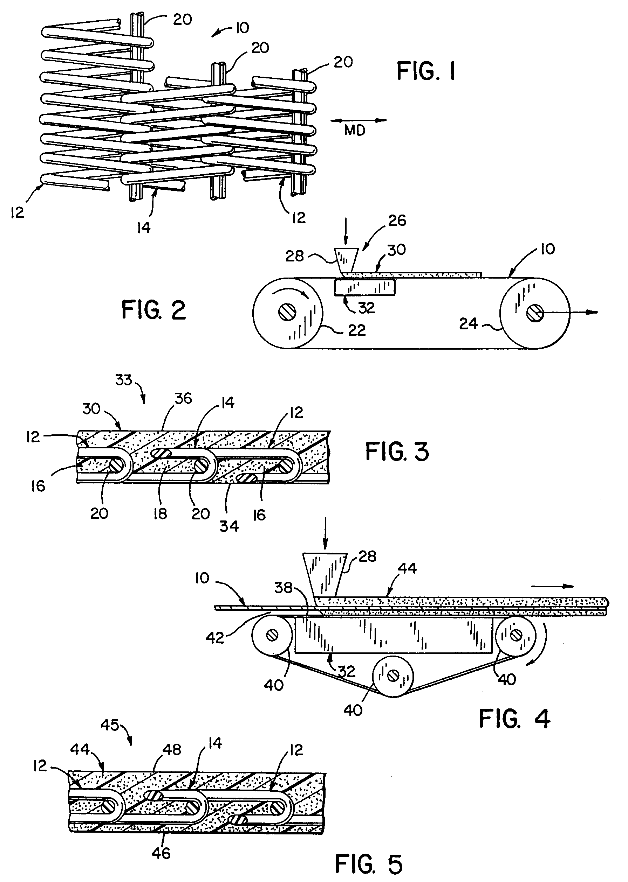

Fig. 1 illustrates a section of a spiral-type base or carrier 10 which forms a part of the long nip press belt of the invention. The construction of base 10 is representatively illustrated in Leuvelink U.S. Patent 4,345,730, the disclosure of which is incorporated by reference. This patent discloses use of the spiral-type material as a papermaking fabric which directly supports the web.

Base 10 is constructed of oppositely oriented axially extending spirals, shown at 12, 14. Spirals 12 are oriented in one direction, e.g. with their upper portions being inclined leftwardly, and spirals 14 are oriented oppositely, e.g. with their upper portions inclined to the right between spirals 12.

Spirals 12 and 14 extend along parallel longitudinal axes. Referring to Figs. 3 and 5, spirals 12 and 14 define longitudinally extending internal passages 16, 18, respectively. Spirals 12 and 14 are arranged to overlap each other, so that the end portions of internal spaces 16, 18 overlap. Connector rods 20 extend through the overlapping portions of spiral internal spaces 16, 18, to connect spirals 12 and 14 into a continuous mat.

Construction of a spiral structure as shown in Fig. 1 and described above is known in the art.

Referring to Fig. 2, base 10 is constructed into an endless belt according to conventional technology, and is positioned about a pair of rolls 22, 24. One of rolls 22, 24 is driven so as to provide movement of the top run of base 10 in a left-to-right direction.

A urethane coating apparatus, schematically shown at 26, is positioned over the upper run of base 10, and includes a nozzle 28 which deposits a coating of urethane, shown at 30, onto base 10. A stationary box 32, defining a planar upper surface, is located below nozzle 28, and the upper run of base 10 extends through a space between the upper surface of box 32 and nozzle 28, with the lower surface of base 10 engaging the upper surface of box 32.

Urethane coating 30 is applied to base 10 by nozzle 28 in a substantially uniform thickness throughout the width of base 10. When applied to base 10, the urethane material is in a substantially liquid state, and functions to flow into and completely fill passages 16, 18 of spirals 12, 14, respectively, to a depth such that the lower extent of urethane coating 30 is coextensive with the lower surface of base 10. Rolls 22, 24 are operated at a speed such that urethane coating 30 has set and hardened sufficiently when discharged from the upper surface of box 32 to form an integral, self-supporting sheet or mass with base 10 embedded therein. This process of applying urethane coating 30 to base 10 is continued while base 10 is moved by rolls 22, 24 until the entire extent of base 10 is coated with coating 30 to thereby form an integral, endless urethane belt 33 reinforced by base 10 embedded therewithin.

As noted previously, urethane coating 30 defines a lower surface, shown at 34, which is coextensive with the lower surface of base 10. Coating 30 further defines an upper surface 36 spaced above the upper surface of base 10. Representatively, base 10 has a thickness of approximately 0.08 inches, and coating 30 has a thickness of approximately 0.13 inches, leaving upper surface 36 of coating 30 approximately 0.05 inches above the upper surface of base 10. This thickness of coating 30 has been found to provide sufficient flexibility and strength to belt 33 to withstand use in a long nip press environment.

After coating 30 has been applied to base 10, upper surface 36 of coating 30 may be ground and polished in accordance with conventional technology.

Fig. 4 illustrates another arrangement for forming a long nip press belt according to the invention. In this arrangement, box 32 is positioned below the upper run of a pouring belt 38, which extends the entire width of base 10. Pouring belt 38 is trained about a series of rolls 40, one of which is driven to provide movement of pouring belt 38 below base 10 at the same rate of speed at which base 10 travels between rollers 22, 24. Base 10 and pouring belt 38 are arranged such that a space, shown at 42, is disposed between the lower surface of base 10 and the upper surface of belt 38.

A urethane coating 44 is applied to base 10 from nozzle 28. Coating 44 again functions to completely fill spaces 16, 18 in spirals 12, 14, respectively of base 10, and to pass through base 10 and space 42 into engagement with the upper surface of pouring belt 38. This results in a long nip press belt 45, as illustrated in Fig. 5. Belt 45 is constructed substantially identically to belt 33 of Fig. 3 in which base 10 is embedded within and reinforces urethane coating 44. In this embodiment, however, urethane coating 44 defines a lower surface 46 which is spaced below the lower surface of base 10. As in the embodiment of Fig. 3, the upper surface 48 of belt 45 is disposed above the upper surface of base 10. Representatively, coating 44 has a thickness of approximately 0.17 inches, and base 10 again has a thickness of approximately 0.08 inches. Upper surface 48 of belt 45 is disposed approximately 0.05 inches above the upper surface of base 10, and lower surface 48 of coating 44 is disposed approximately 0.04 inches below the lower surface of base 10. This thickness of coating 44 is sufficient to provide adequate strength and flexibility to belt 45 for use in a long nip press environment.

Rollers 40 are configured and arranged relative to nozzle 28 to provide support for coating 44 while it sets and hardens after application from nozzle 28 so that, when coating 44 and base 10 are discharged from the rightwardmost roller 40, coating 44 forms a self-supporting sheet or mass with base 10 embedded therewithin. The process of applying coating 44 to base 10 is continued while base 10 is moved by rolls 22, 24 until the entire extent of base 10 is coated with coating 44.

Coatings 30, 44 may be any satisfactory elastomer such as conventional urethane as is available from Uniroyal Chemical Corp. under its designation Adiprene Ribbon Flow. Alternatively, any satisfactory elastomer such as is known to those of ordinary skill in the art could be employed to form coatings 30, 44. Coatings 30, 44 are impervious and flexible, and have a sufficient hardness to withstand use in a long nip press environment. Representatively, coatings 30, 44 have a hardness of approximately 85 to 95 (shore A). When poured coatings 30, 44 have a viscosity ranging from 400 to 7200 centipoise.

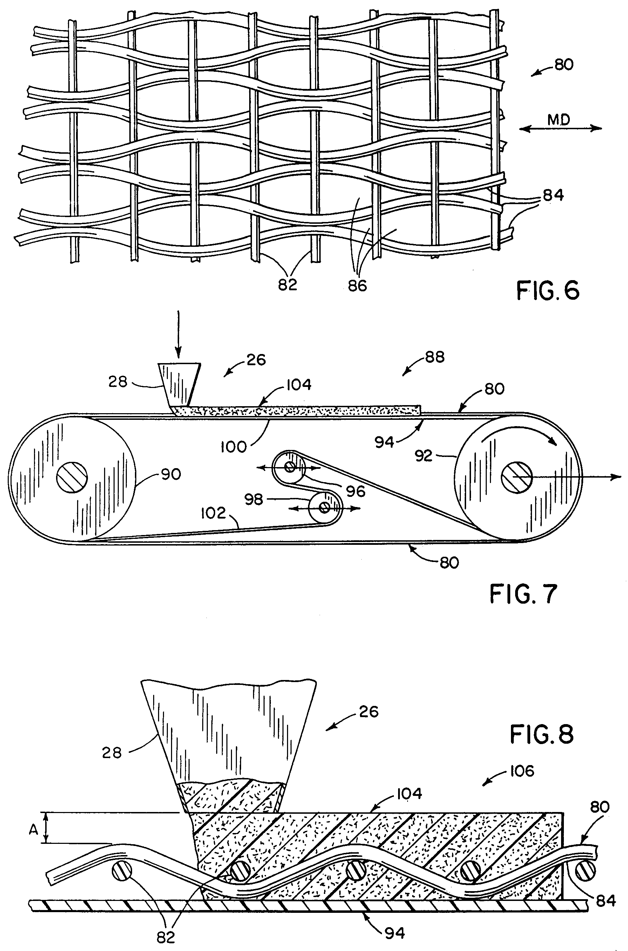

Fig. 6 illustrates a section of a mesh-type base or carrier 80 which may be used in place of spiral fabric 10 to construct a shoe press belt according to the invention. Base 80 is constructed of cross-direction (CD) strands 82 and undulating machine direction (MD) strands 84. Strands 82, 84 may be monofilament or multifilament. In accordance with known construction, each MD strand 84 is looped over and under alternate CD strands 82, with adjacent MD strands 84 looping under and over alternate CD strands 82. This construction provides passages, such as shown at 86, which extend between the upper and lower surfaces of base 80. In addition, base 80 defines internal voids above and below strands 82, 84 which form the straight-through vertical passages 86.

Fig. 7 illustrates a manufacturing installation 88 for use in constructing a shoe press belt utilizing base 80. Installation 88 includes a pair of coating rolls 90, 92. A coating belt 94 is trained about rolls 90, 92. A pair of laterally movable idler rolls 96, 98 are located between coating rolls 90, 92. Coating belt 94 defines an upper horizontal run 100 extending linearly and tangentially between the uppermost points of coating rolls 90, 92, and a lower run 102 in which coating belt 94 is trained about idler rolls 96, 98, to tension coating belt 94.

Coating belt 94 is a smooth endless, heat stabilized, liquid impermeable belt, preferably constructed of a material such as polyurethane, polyester, acrylonitrile, or the like.

Base fabric 80, which has its ends pinned or otherwise joined together to form an endless loop, is also trained about coating rolls 90, 92 and overlies coating belt 94 at its upper run 100 and where coating belt 94 is trained about coating rolls 90, 92. One of coating rolls 90, 92 is horizontally movable in a conventional manner, in this instance coating roll 92, to enable base 80 to be positioned over coating belt 94.

As shown in Fig. 8, base 80 is positioned on upper run 100 of coating belt 94 such that the lower extent of MD strands 84 is spaced slightly above the upper surface of coating belt 94. Alternatively, base 80 may be positioned such that MD strands 84 rest directly on the upper surface of coating belt 94.

Urethane coating apparatus 26 is positioned over base 80 and upper run 100 of coating belt 94. Coating apparatus 26 includes a nozzle 28, and is located adjacent upstream coating roller 90. In accordance with conventional technology, nozzle 98 deposits a coating of liquid urethane, shown at 104, onto base 80.

As before, urethane coating 104 is supplied from nozzle 28 in a substantially uniform thickness throughout the width of base 80. When urethane coating 104 is applied, the urethane material is in a liquid state. Urethane coating 104 has a relatively low viscosity when applied, sufficient to enable it to fill passages 86 and the voids above and below strands 82, 84, and coating 104 comes into contact with and is supported above coating belt 94. The simultaneous movement of base 80 and coating belt 94 is continued while urethane coating 104 is applied to base 80, resulting in an endless layer of urethane being applied to endless base 80 to define an endless belt for use in a shoe press. Nozzle 28 is located such that, when coating 104 reaches roller 92 and begins to curve therearound, urethane coating 104 has attained sufficient green strength to enable it to withstand shear forces which are imparted thereto as coating 104 travels about coating rollers 90 and 92. After coating 104 has been completely applied throughout the length of base 80 to construct a belt 106, coating 104 is ground in accordance with conventional technology before removal from coating rolls 90, 92.

As shown in Fig. 8, the space between the lowermost extent of MD strands 84 and the upper surface of coating belt 94 provides a thin layer of coating 104 below base 80. Alternatively, if base 80 rests directly on coating belt 94, the thin lower layer of coating 104 would be eliminated.

The upper surface of coating 104 is spaced above the upper surface of base 80 an amount sufficient to provide clearance for grinding of coating 104. Illustratively, base 80 may have a thickness of approximately 0.04 inches, and dimension A between the upper surface of base 80 and the upper surface of coating 104 may be 0.125 inches.

It can thus be appreciated that installation 88, and in particular use of coating belt 94, enables a manufacturer to utilize a base fabric having an extremely open weave construction. Such fabrics are typically less complex, and therefore less expensive, than the more closed, tight fabrics used in the prior art. This significantly decreases manufacturing costs, yet results in a shoe press belt having operational characteristics which meet or surpass those of belts utilizing more complex, expensive base structures.

At the same time, it should be understood that installation 88, in particular coating belt 94, could be used with a more tight, closed base fabric to provide a satisfactory end result by preventing the liquid urethane coating from dripping through the base fabric.

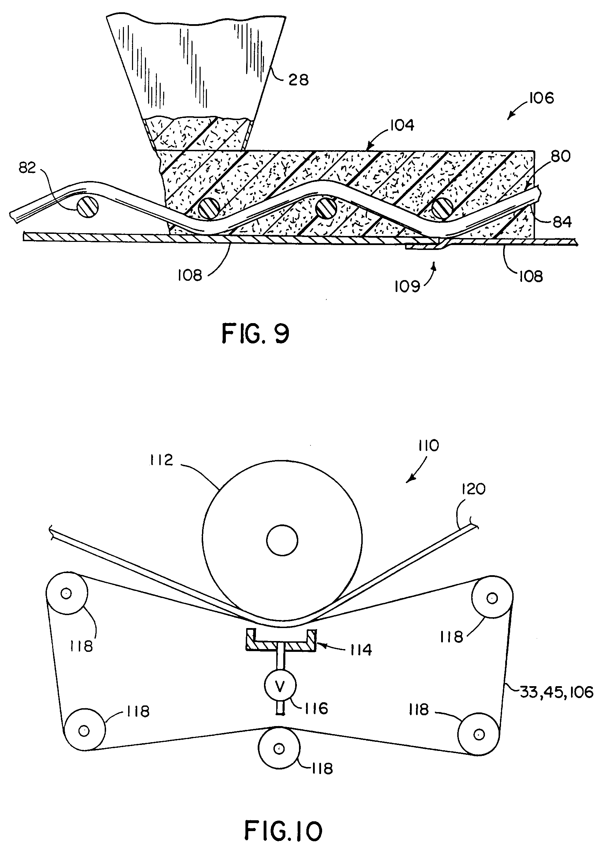

Fig. 9 illustrates an alternative method for constructing belt 106. In Fig. 9, side-by-side strips of adhesive tape 108 are applied to the underside of base 80, such that the adhesive of tape strips 108 adheres to the lowermost points of MD strands 84. Adhesive tape 108 may be that such as is manufactured by the 3M Company of St. Paul, Minnesota under its designation No. 231. Adhesive tape 108 is supplied in varying widths and, representatively, a width of approximately 12 inches may be employed. Adhesive tape 108 is applied to base 80 in either a crosswise or lengthwise direction, such that a series of individual strips of adhesive tape 108 extend across base 80. The strips of adhesive tape 108 overlap, such as is shown at 109, to provide an impervious layer below base 80. Adhesive tape 108 takes the place of coating belt 94 (Figs. 7, 8), and provides a removably backing layer. After adhesive tape 108 is applied to the entire extent of the lower surface of base 80, base 80 with adhesive tape 108 applied is placed onto coating rolls 92, which are then operated as described above to move base 80 while resin coating 104 is applied in the same manner as described previously. The resin material flows through base 80 onto adhesive tape 108, which then supports resin coating 104 thereabove to encapsulate base 80. Once belt 106 is formed, belt 106 and the strips of adhesive tape 108 are removed from coating rolls 90, 92, and the strips of adhesive tape 108 are peeled off of belt 106. Adhesive tape 108 thus provides a removable backing layer temporarily engaged with base 80 during formation of belt 106.

Any open-weave structure base fabric can be employed to construct a belt, such as 106, according to the above description in connection with Figs. 6-9. The range of acceptable openness of base fabrics can vary greatly, e.g. from 5% to 80% of the surface area of the base fabric, when the base fabric is viewed as in Fig. 6. Typically, the base fabric will have unimpeded open areas ranging between 20% and 50% of the base fabric surface area. As noted, the openness of the base fabric enables the flowable resin material to completely penetrate the straight-through passages in the base fabric and to fill the base fabric voids.

After manufacture, the endless, impervious belt, such as 33, 45, 106, is installed in a shoe press of a papermaking machine, shown generally at 110. Shoe press 110 includes a cylindrical rotatable press roll 112 and a press shoe 114 including a valve 116 which controls hydraulic pressure to shoe 114. The shoe press belt, such as 33, 45, 106, is trained about a series of rolls 118, which are oriented relative to roll 112 so as to provide upward pressure toward roll 112 to form an arcuate press area. A conventional papermaking felt 120, which supports the paper web, is disposed between roll 112 and the shoe press belt, such as 33, 45, 106, which functions to exert pressure on felt 120 and the web throughout an extended area of roll 112 when compared to a conventional nip press. The surface of the shoe press belt, such as 33, 45, 106, which engages felt 120 may be grooved, drilled or otherwise patterned, as is known in the art, to provide additional void volume for water removal during processing.

Various alternatives and embodiments are contemplated as being within the scope of the following claims particularly pointing out and distinctly claiming the subject matter regarded as the invention.

## Claims

1. An endless, impervious belt for use in a long nip press, comprising:
an open-structure base defining first and second surfaces and a series of passages extending substantially perpendicularly to the first and second surfaces which are unimpeded to form internal voids; and
a polymeric resin coating applied to the base to embed the base therein, the polymeric coating filling the passages and the internal voids and extending at least coextensively with both the first and second surfaces of the base.

2. The belt of claim 1, wherein the polymeric resin coating extends past both the first and second surfaces of the base to encapsulate the base therein.

3. The belt of claim 1, wherein the belt is made by:
training an impervious coating belt about a pair of rollers to define an upper substantially horizontal run and a lower run;
placing the open-structure base over a backing, and training the base and backing about the pair of rollers such that the base defines an upper run;
driving at least one of the rollers to move the base fabric, resulting in movement of the upper run of the base fabric;
pouring the polymeric resin coating, in flowable form, onto the base such that the resin material passes through the passages and fills the voids, wherein the resin material flows onto the backing and is supported thereby to encase the base; and
solidifying the resin material.

4. A method of making an endless, impervious belt for a long nip press, comprising applying a polymeric resin coating to an open-structure base, the base defining first and second surfaces and a series of passages extending substantially perpendicular to the first and second surfaces and including internal voids, and wherein the resin coating is applied so as to fill the passages and the internal voids and to extend at least coextensively with both the first and second surfaces of the base.

5. The method of claim 4, wherein the polymeric resin coating is applied to the open-structure base by training an impervious coating belt about a pair of rollers to define an upper substantially horizontal run and a lower run, placing the base about the pair of rollers and over the coating belt such that the base defines an upper run overlying the upper run of the coating belt and in close proximity thereto, driving at least one of the rollers to simultaneously move the coating belt and the base to move the upper run of the coating belt and the base, and pouring the polymeric resin material, in flowable form, onto the base such that the resin material passes through the voids and passages of the base and onto the coating belt to encase the base, and solidifying the resin material.

6. The method of claim 4, wherein the polymeric resin coating is applied to the open-structure base by engaging an adhesive backing layer with the lower surface of the base, training the base and the backing layer about a pair of rollers such that the rollers engage the backing layer, to define an upper substantially horizontal run of the base, driving at least one of the rollers to move the base and to thereby move its upper run, and pouring the polymeric resin material, in flowable form, onto the base such that the resin material passes through the voids and passages of the base and onto the backing layer to encase the base, and solidifying the resin material.

7. The method of claim 4, wherein the step of applying the polymeric resin coating to the base comprises applying the coating such that the coating extends above an upper one of the first and second surfaces of the base.

8. A method of making an endless, impervious belt for a long nip press, comprising the steps of:
placing a base fabric with a backing layer about the pair of rollers such that the base fabric defines an upper run, the base fabric defining upper and lower surfaces and voids which open onto the upper and lower surfaces;
driving at least one of the rollers to move the base fabric, resulting in movement of the upper run of the base fabric;
pouring a flowable polymeric resin material onto the base fabric such that the resin material passes through the voids and onto the backing layer coating belt, to encase the base fabric;
solidifying the resin material; and
removing the backing layer.

9. The method of claim 8, wherein the backing layer comprises a coating belt trained about the pair of rollers to define an upper substantially horizontal run and a lower run, and wherein the step of placing the base fabric about the pair of rollers comprises placing the base fabric over the coating belt such that the base fabric overlies the upper run of the coating belt and is in close proximity thereto.

10. The method of claim 8, wherein the backing layer comprises an adhesive layer adhered to the surface of the base fabric and engaged with the pair of rollers, and wherein driving at least one of the rollers to move the base fabric comprises driving the adhesive backing layer to move the base fabric, wherein the backing layer is removable from the base fabric after solidification of the resin material.

11. The method of claim 8, further comprising the step of training the coating belt about two or more movable idler rollers disposed between the pair of rollers for varying the effective length of the coating belt.

12. The method of claim 8, wherein the step of pouring a flowable polymeric resin material onto the base fabric takes place toward the upstream end of the base fabric upper run, wherein the resin material is solidified when it reaches the downstream one of the pair of rollers.

13. The method of claim 8, wherein the step of pouring the resin material onto the base fabric comprises pouring a quantity of resin material onto the base fabric such that the upper surface of the resin material is spaced above the upper surface of the base fabric.

14. The method of claim 9, wherein the lower surface of the base fabric is maintained in close proximity to the coating belt while the resin material is poured onto the base fabric, wherein the resin material defines a thin layer between the base fabric lower surface and the coating belt.

15. A press arrangement for extracting water from a web of fibrous material, comprising:
a rotatable roller;
a press belt located adjacent the roller; and
a wet press fabric interposed between the belt and the roller, wherein the belt is arranged so as to exert pressure on the wet press fabric against the surface of the roller, and wherein the wet press fabric supports a fibrous web;
wherein the belt comprises an open-structure base defining first and second surfaces and a series of passages extending therebetween and including internal voids, and a polymeric resin coating applied to the base and filling the passages and the internal voids, and extending at least coextensively with both the first and second surfaces of the base.
